(19) **Europäisches Patentamt / European Patent Office / Office européen des brevets**

(11) **EP 4 557 187 B1**

(12) **EUROPEAN PATENT SPECIFICATION**

(45) Date of publication and mention
of the grant of the patent:
**06.05.2026 Bulletin 2026/19**

(21) Application number: **23210163.4**

(22) Date of filing: **15.11.2023**

(51) International Patent Classification (IPC):
**G06Q 10/04** *(2023.01)*      **G06Q 10/06** *(2023.01)*
**G06Q 10/063** *(2023.01)*      **G06Q 50/06** *(2024.01)*
**H02J 3/00** *(2026.01)*      **H02J 13/00** *(2026.01)*

(52) Cooperative Patent Classification (CPC):
**G06Q 10/04; G06Q 10/06; G06Q 10/063;
H02J 3/003; H02J 13/14;** G06Q 50/06

(54) **A METHOD FOR PREDICTING ELECTRIC ENERGY CONSUMPTION IN AN ELECTRIC GRID**

VERFAHREN ZUR VORHERSAGE DES STROMVERBRAUCHS IN EINEM STROMNETZ

PROCÉDÉ DE PRÉDICTION DE LA CONSOMMATION D'ÉNERGIE ÉLECTRIQUE DANS UN RÉSEAU ÉLECTRIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**21.05.2025 Bulletin 2025/21**

(73) Proprietor: **ABB S.p.A.
20124 Milano (IT)**

(72) Inventors:
• **Lauricella, Marco
68199 Mannheim (DE)**
• **Mandelli, Giulia
24020 Torre Boldone (BG) (IT)**
• **Fenili, Lorenzo
24030 Valbrembo (BG) (IT)**

(74) Representative: **De Bortoli, Eros et al
Zanoli & Giavarini S.p.A.
Via Melchiorre Gioia, 64
20125 Milano (IT)**

(56) References cited:
**US-B1- 11 416 936      US-B2- 10 515 308**

• DAVIDE ANGUITA ET AL: "Long-term energy
load forecasting using Auto-Regressive and
approximating Support Vector Regression",
ENERGY CONFERENCE AND EXHIBITION
(ENERGYCON), 2012 IEEE INTERNATIONAL,
IEEE, 9 September 2012 (2012-09-09), pages 842 -
847, XP032466790, ISBN: 978-1-4673-1453-4,
DOI: 10.1109/ENERGYCON.2012.6348269

**Description**

The present invention relates to the field of electric power distribution grids. More particularly, the present invention relates to a method for predicting electric energy consumption in an electric grid.

As is known, the management of electric grids generally requires an accurate prediction activity of the electric energy consumption to allow system operators to properly plan the use of electric energy over time, thereby preventing or limiting demand peaks and making more favourable purchase plans of electric energy.

Most common forecast methods are based on machine learning (ML) techniques and require that relevant amounts of data are processed to provide accurate predictions. Additionally, these methods typically provide for carrying out a computationally intensive training phase of an artificial intelligence unit (e.g., a neural network) executing the ML algorithms.

ML-based prediction methods can thus be hardly implemented by computing systems typically managing the operation of field devices and switchboards in electric grids, which often have relatively limited storage and computational resources unsuitable to process huge amounts of data. These computing systems are, in fact, commonly based on Edge computing architectures and are basically aimed at bringing computation and data storage closer to the sources of data to improve response times and save bandwidth rather than processing large datasets.

In the state of the art, there have been developed prediction methods (e.g., based on linear regression analysis techniques), which normally require lighter computational and data storage resources compared to ML-based forecast methods and which would therefore be adapted for being implemented computing systems commonly used to manage electric grids.

An example of these prediction methods is described in US10515308B2.

However, available prediction methods of this type often provide relatively poor performances in terms of reliability and prediction accuracy compared to ML-based prediction techniques. The main task of the present invention is to provide to a method for predicting electric energy consumption in an electric grid, which can overcome the limitations of the prior art highlighted above.

Within this aim, another purpose of the present invention is to provide a prediction method, which can ensure high level performances in terms of reliability and prediction accuracy.

A further aim of the invention is to provide a prediction method, which can be easily implemented even when limited computational and data storage resources are available and which is therefore suitable for being implemented in computing systems commonly used for managing the operation of electric grids, for example in computing systems based on Edge computing architectures.

This task and these aims, as well as other aims that will appear evident from the subsequent description and from the attached drawings, are achieved, according to the invention, by a prediction method, according to claim 1 and to the related dependent claims proposed below.

In a general definition, the method, according to the invention, comprises the following steps:

- acquiring first detection data including detection values related to an actual electric energy consumption in said electric grid;
- acquiring additional detection data including detection values related to the energy consumption in said electric grid during at least a time window preceding a given reference instant;
- acquiring calendar data including chronological information associated to the operation of said electric grid;
- calculating training data based on the acquired detection data and calendar data;
- based on said training data, setting a linear auto-regressive mathematical model describing the trend of the electric energy consumption in said electric grid. Such a linear auto-regressive mathematical model is configured to process at least a set of exogenous input values indicative of at least a periodic function approximating the profile of the electric energy consumption in said electric grid over said at least a time window preceding said reference instant;
- based on said linear auto-regressive model, calculating prediction data including prediction values related to the electric energy consumption in said electric grid during a time window following said reference instant.

Preferably, the method according to the invention comprises the step of acquiring second detection data including detection values related to the energy consumption in said electric grid during a first time window preceding said reference instant. In this case, the linear auto-regressive mathematical model is configured to process first exogenous input values indicative of a first periodic function approximating the profile of the electric energy consumption in said electric grid over said first time window.

Preferably, the method according to the invention comprises also the step of acquiring third detection data including detection values related to the energy consumption in said electric grid during a second time window preceding said reference instant. In this case, the linear auto-regressive mathematical model is configured to process second exogenous input values indicative of a second periodic function approximating the profile of the electric energy consumption in said electric grid over said second time window. Preferably, such a second time window is longer than said first time window.

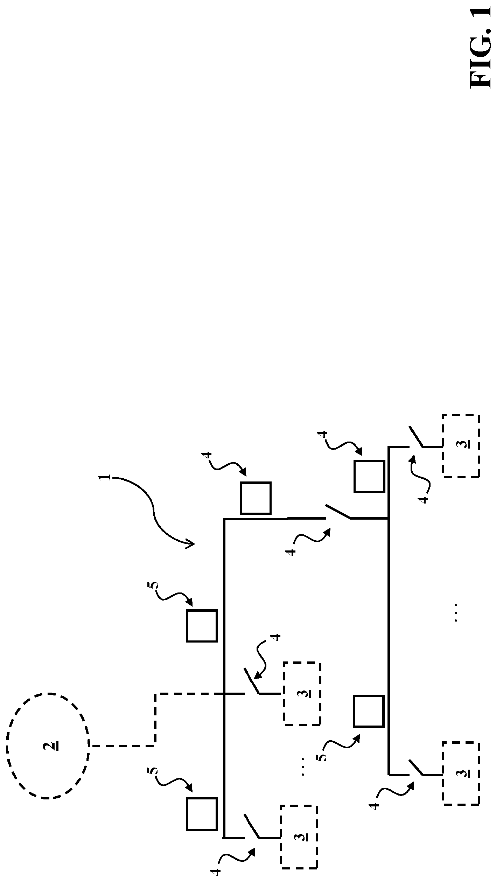

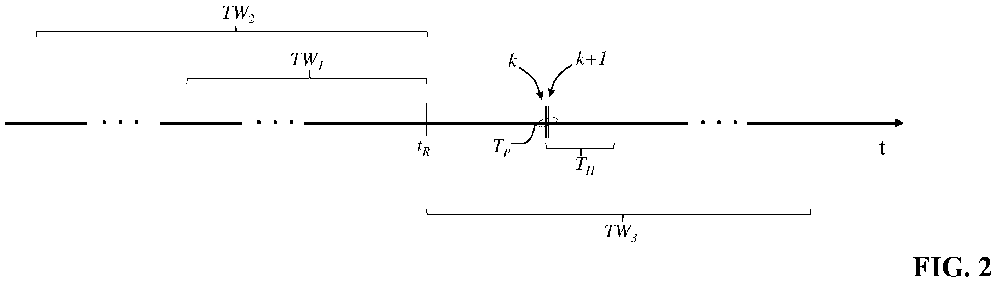

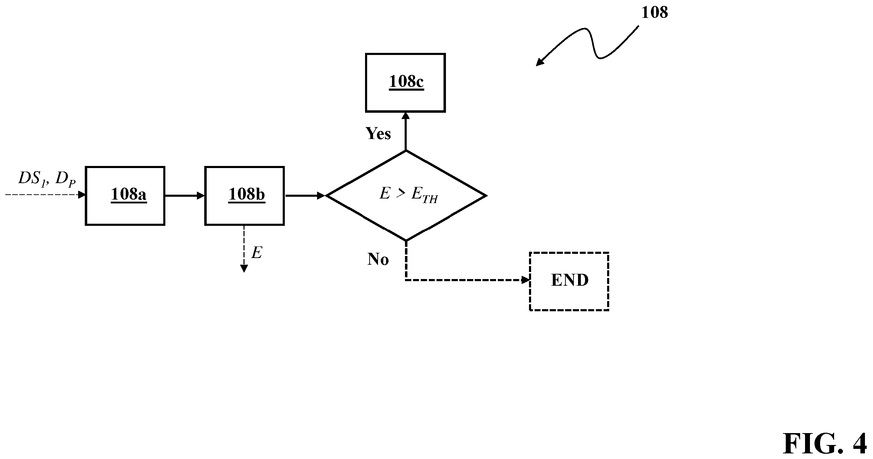

Further characteristics and advantages of the present invention shall emerge more clearly from the description of preferred but not exclusive embodiments illustrated purely by way of example and without limitation in the attached drawings, in which figure 1 schematically illustrates a generic electric grid for electric power distribution applications while figures 2-5 schematically illustrate the prediction method, according to the invention.

With reference to the mentioned figures, the present invention relates to a method 100 for predicting an electric energy consumption in an electric grid 1 (figure1).

In principle, the electric grid 1 may be of any type, for example a smart grid, a micro-grid, or an electric power distribution network for industrial, commercial, or residential buildings or plants.

Preferably, the electric grid 1 operates at low or medium voltage levels, where the term "low voltage" relates to operational voltages up to 1.2 kV AC and 1.5 kV DC and the term "medium voltage" relates to operational voltages higher than 1.2 kV AC and 1.5 kV DC up to several tens of kV, e.g., up to 72 kV AC and 100 kV DC.

The electric grid 1 may be of the single-phase type or multiple-phase (e.g., three-phase) type. In general terms, the electric grid 1 can be electrically connected to one or more power sources 2 (e.g., an electric power utility) and to one or more electrical loads 3, each consuming a corresponding amount of electric energy in operation.

The electric grid 1 may comprise one or more field devices 4 (e.g., switching devices, sensors, and the like) configured to regulate the flow of electric power along the branches of the electric grid and one or more intelligent electronic devices 5 (e.g., controllers, protection relays, smart interfaces, and the like) configured to control the operation of the above-mentioned field devices and, more generally, of the electric grid.

Advantageously, the intelligent electronic devices 5 may be equipped with suitable computing and storage resources to process data related to the operation of the electric grid.

Preferably, the intelligent electronic devices 5 are based on Edge computing architectures.

In general, the above-mentioned electric grid 1, the power source 2, the electrical loads 3, the field devices 4 and intelligent electronic devices 5 may be of known type and will not be here further described in details for the sake of brevity.

The method 100, according to the invention, is adapted for being executed by a computerized device. This latter may advantageously include data processing resources capable of executing software instructions configured to implement the method.

Such a computerized device is preferably an intelligent electronic device 5 of the electric grid, which may be installed on the field as a self-standing device (e.g., a controller) or embedded in an electrical device 4 (e.g., as a protection relay). As an example, such an intelligent electronic device may be an intelligent switchboard HMI operatively coupled with a certain number of field devices 4 of the electric grid and configured to process data related to the operation of the electric grid.

As it will be better explained in the following, the method 100 provides for calculating prediction data $D_P$ related to the electric energy consumption in the electric grid by using a special mathematical model $M_R$, which is cyclically set based on training data $D_T$ calculated by collecting and processing detection data $D_{S1}$, $D_{S2}$, $D_{S3}$ related to the real-time and historical electric energy consumption in the electric grid.

Referring to figure 2, the real time detection data $D_{S1}$ are continuously acquired while historical detection data $D_{S2}$, $D_{S3}$ are acquired at subsequent reference instants $t_R$, at which the above-mentioned mathematical model is set. The historical detection data $D_{S2}$, $D_{S3}$ refer to different training time windows $TW_1$, $TW_2$ preceding the corresponding time reference instant $t_R$ and have different selectable durations (e.g., some weeks or some months or years respectively).

Once it is set at the corresponding reference instant $t_R$, the set mathematical model $M_R$ is used to calculate prediction data related to the future electric energy consumption in the electric grid during a prediction time-window $TW_3$ (e.g., a week) following the reference instant $t_R$. During the above-mentioned prediction time window $TW_3$, the above-mentioned prediction data $D_P$ are calculated periodically with a predefined time granularity $T_P$ (e.g., 15 minutes) and with reference to a predefined time horizon $T_H$ (e.g., 24 hours).

At the end of the prediction time-window $TW_3$, a new mathematical model is set at a new reference time instant and it is used to calculate the above-mentioned prediction data during a new prediction time window following said new reference instant.

The prediction method 100, according to the invention, will now be described in details. Referring to figures 2-3, the method 100 comprises a step 101 of acquiring first detection data $D_{S1}$ including detection values related to the actual (real-time) electric energy consumption in the electric grid.

The first detection data $D_{S1}$ refer to the instantaneous energy consumption in the electric grid at each generic operation instant.

The first detection data $D_{S1}$ may be collected from one or more field devices 4 (e.g., sensors) or from one or more intelligent electronic devices 5 installed on the field or even from remote computerized devices.

Preferably, the step 101 is continuously executed, possibly in parallel to other steps of the method 100. The first detection data $D_{S1}$ thus include vectors of detection values, which are continuously and cyclically acquired and stored in a memory at subsequent acquisition instants, in which two consecutive acquisition instants are separated by a time interval corresponding to a predefined acquisition period of said first detection data.

According to the invention, the prediction method 100 comprises one or more acquisition steps 102, 103, in which one or more sets of additional detection data $D_{S2}$, $D_{S3}$ are acquired.

Each set of additional data includes detection values related to the historical energy consumption in the electric grid during a corresponding time window $TW_1$, $TW_2$ preceding a given reference instant $t_R$. As it is explained above, the time reference instant $t_R$ is a time instant, at which a mathematical model $M_R$ for calculating the prediction data $D_P$ related to the future electric energy consumption in the electric grid is established.

Preferably, the prediction method 100 comprises a step 102 of acquiring second detection data $D_{S2}$ including detection values related to a historical electric energy consumption in the electric grid during a first time window $TW_1$ preceding the reference instant $t_R$.

The second detection data $D_{S2}$ refer to the energy consumption in the electric grid at operation instants preceding the time reference instant $t_R$ and included in the first time window $TW_1$. The duration of the first time window $TW_1$ may be selected each time the above-mentioned mathematical model is established. As an example, the first time window $TW_1$ may refer to some weeks preceding the time reference instant $t_R$.

The second detection data $D_{S2}$ may be acquired from a memory or from one or more intelligent electronic devices 5 installed on the field or even from remote computerized devices. Preferably, the prediction method 100 comprises a step 103 of acquiring third detection data $D_{S3}$ including detection values related to a historical electric energy consumption in the electric grid during a second time window $TW_2$ preceding the reference instant $t_R$.

The third detection data $D_{S3}$ refer to the energy consumption in the electric grid at operation instants preceding the time reference instant $t_R$ and included in the second time window $TW_2$. The duration of the second time window $TW_2$ is preferably very longer than the duration of the first time window $TW_1$. As an example, the second time window $TW_2$ may refer to months or years preceding the time reference instant $t_R$.

The third detection data $D_{S3}$ may be acquired from a memory or from one or more intelligent electronic devices 5 installed on the field or even from remote computerized devices. According to the invention, the prediction method 100 comprises a step 104 of acquiring calendar data Dc including chronological information associated to the operation of the electric grid. The calendar data Dc may include information related to working days, non-working days, or holidays or, more generally, other chronological circumstances, which may influence the energy power consumption in the electric grid.

The collected chronological information advantageously refers to a time window $TW_3$ following the reference instant $t_R$.

The calendar data Dc may be acquired from a memory or from one or more intelligent electronic devices 5 installed on the field or even from remote computerized devices.

According to the invention, the prediction method 100 comprises a step 105 of calculating training data $D_T$ by processing the acquired detection data and calendar data.

The training data $D_T$ are intended to be used for setting a mathematical model describing the trend of the electric energy consumption in the electric grid during a third time window $TW_3$ following the reference instant $t_R$.

In principle, the duration of the third time window $TW_3$ may be varied each time the above-mentioned mathematical model is established. As an example, the third time window $TW_3$ may refer to a week following the time reference instant $t_R$.

Preferably, the calculation step 105 includes processing the first detection data $D_{S1}$, which are continuously acquired from outer data sources, to check the correctness of the acquired data. Advantageously, the first detection data $D_{S1}$ are processed by means of suitable statistical techniques to identify outlier values or missing values. Possible incorrect detection values are conveniently replaced by using suitable interpolation techniques.

Preferably, the calculation step 105 includes processing the acquired second detection data $D_{S2}$ to identify the trend of the electric energy consumption in the electric grid during the first time window $TW_1$. In practice, the acquired second detection data $D_{S2}$ are analysed through suitable statistic techniques to identify a short-term behaviour of the electric energy consumption in the electric grid before the reference instant $t_R$.

As it will be more apparent from the following, the information obtained through this processing activity are conveniently used to calculate a first periodic function $U(t)$ describing the profile of the electric energy consumption in the electric grid over the first time window $W_{T1}$.

This allows setting the above-mentioned mathematical model $M_R$ in such a way to consider possible short-term non-linearities influencing the electric energy consumption in the electric grid.

The information obtained through this processing activity may be also used to tune appropriately the duration of the first time window $TW_1$.

As an example, the first time window $TW_1$ may be tuned at two weeks or four weeks preceding the reference instant $t_R$, if the detected electric energy consumption shows a high level of periodicity or a less regular profile, respectively.

Advantageously, the duration of the first time window $TW_1$ may be tuned depending also on the chronological information referring to said time window, which may be advantageously derived from the acquired calendar data $D_C$.

Preferably, the calculation step 105 includes processing the acquired third detection data $D_{S3}$ to identify the trend of the electric energy consumption in the electric grid during the second time window $TW_2$. In practice, the acquired third detection data $D_{S2}$ are analysed through suitable statistic techniques to identify a long-term trend (or seasonality) of the electric energy consumption in the electric grid before the reference instant $t_R$. This would not be possible, if only the historical detection data related to the first time window $TW_1$ were considered.

As it will be more apparent from the following, the information obtained through this processing activity are conveniently used to calculate a second periodic function $U_l(t)$ describing the profile of the electric energy consumption in the electric grid over the second time window $TW_2$.

This allows setting the above-mentioned mathematical model in such a way to consider possible long-term non-linearities or seasonal factors influencing the electric energy consumption in the electric grid.

According to the invention, the prediction method 100 comprises a step 106 of setting a linear auto-regressive mathematical model $M_R$ based on the calculated training data $D_T$.

The mathematical model $M_R$ describes the trend of the electric energy consumption in the electric grid and it is intended to be used for calculating the prediction data $D_P$ related to the electric energy consumption at instants following the reference instant $t_R$, particularly at subsequent instants $k$ included in the electric grid during the third time window $TW_3$.

As it has an auto-regressive nature, at each instant $k+1$, the mathematical model $M_R$ is configured to process endogenous input values $y(k)$ referred to a preceding instant $k$.

The endogenous input values $y(k)$ include previously calculated prediction values related to electric energy consumption in the electric grid and, possibly, also previously acquired detection values related to the instantaneous electric energy consumption in the electric grid, which are included in the first detection data $D_{S1}$.

According to a particularly important aspect of the invention, however, the mathematical model $M_R$ is configured to process one or more sets of exogenous input values $U(k)$, $U_l(k)$.

Each set of exogenous input values is indicative of a corresponding periodic function $U(t)$, $U_l(t)$ approximating the profile of the electric energy consumption in the electric grid over a corresponding time window $TW_1$, $TW_2$ preceding the reference instant $t_R$.

Preferably, the linear auto-regressive model $M_R$ is configured to process first exogenous input values $U(k)$ referred to an instant $k$ preceding the reference instant $t_R$.

The first exogenous input values $U(k)$ are indicative of a first periodic function $U(t)$ approximating the profile of the electric energy consumption in the electric grid over the first time window $TW_1$.

Preferably, the first periodic function $U(t)$ is a combination of cosine and sine functions having unitary amplitude and different frequencies, for example ranging from hourly values to weekly values. Advantageously, the first periodic function $U(t)$ is calculated based on training data obtained by processing the acquired second detection data $D_{S2}$ to identify the trend of the electric energy consumption in the electric grid during the first time window $TW_1$.

A vector of first exogenous input values $U(k)$ at a generic instant $k$ preceding the reference instant $t_R$ may thus be expressed as the combination of n sinusoidal terms according to the following expression:

$$U(k) = [cos(w_1 k), \ldots, cos(w_n k), sin(w_1 k), \ldots, sin(w_n k)]$$

where the terms, $w_1, \ldots, w_n$ are indicative of the frequencies selected to approximate the profile of the electric energy consumption over the first time window $TW_1$.

Preferably, the linear auto-regressive model $M_R$ is configured to process second exogenous input values $U_l(k)$ referred to an instant $k$ preceding the reference instant $t_R$.

The second exogenous input values $U_l(k)$ are indicative of a second periodic function $U_l(t)$ approximating the profile of the electric energy consumption in the electric grid over the second time window $TW_2$.

Preferably, the second periodic function $U_l(t)$ is a combination of cosine and sine functions having unitary amplitude and different frequencies, for example ranging from monthly values to yearly values.

Advantageously, the second periodic function $U_l(t)$ is calculated based on training data obtained by processing the acquired third detection data $D_{S3}$ to identify the trend of the electric energy consumption in the electric grid during the second time window $TW_2$.

A vector of second exogenous input values $U_l(k)$ at a generic instant $k$ preceding the reference instant $t_R$ may thus be expressed as the combination of q sinusoidal terms according to the following expression:

$$U_l(k) = [cos(w_1 k), \ldots, cos(w_q k), sin(w_1 k), \ldots, sin(w_q k)]$$

where the terms, $w_1, \ldots, w_q$ are indicative of the frequencies selected to approximate the profile of the electric energy consumption over the second time window $TW_2$.

The setting of the mathematical model $M_R$ is conveniently carried out during a training phase, which may include one or more training steps.

At each training event, the parameters $\theta$ of the mathematical model are iteratively calculated until a maximum number of training steps is reached or the estimated error of the calculated prediction values is sufficiently low.

The step 106 of setting the mathematical model $M_R$ conveniently comprises setting the auto-regressive order $m$ of said mathematical model and setting the maximum number $T_{max}$ of training steps for training said mathematical model.

The autoregressive order $m$ is a parameter that may be selected depending on the desired model complexity level, or the length of the considered time windows $TW_i$, or based on a cross-validation phase performed before the implementation of the described approach, for example on a different dataset $D_{S0}$, if available.

As an example, the autoregressive order $m$ may be set as $m = 3$.

The maximum number $T_{max}$ of training steps is a parameter that may be selected depending for example on the performance of the available edge computing unit, or on possible time constraints of the considered application.

Preferably, the number of training events is $T > 1$. In this case, two following training events are advantageously separated by a time interval, which is relatively long compared to the time granularity set for calculating the prediction data $D_P$. For example, if a time granularity of 15 minutes is set, the time interval between two subsequent training events may be 24 hours. Preferably, the linear auto-regressive mathematical model $M_R$ is a linear ARX mathematical model with one or more (more preferably multiple) exogenous inputs.

In general terms, the mathematical model $M_R$ may thus be expressed as:

$$y(k+1) = \varphi(k)^T * \theta = [y(k)^T \ U(k)^T \ U_l(k)^T] * \theta, \ with \ k = m+1, \ ..., \ T_H/T_P.$$

where:

- $y(k)$ is a vector of endogenous input values. For $k <= 2m$, $y(k)$ includes both previously calculated prediction values and real-time detection values included in the first detection data $D_{S1}$ while $y(k)$ includes only previously calculated prediction values for $k > 2m$;
- $U(k)$ is a vector of first exogenous input values indicative of a first periodic function $U(t)$ approximating the profile of the electric energy consumption in the electric grid over the first time window $TW_1$;
- $U_l(k)$ is a vector of second exogenous input values indicative of a second periodic function $U_l(t)$ approximating the profile of the electric energy consumption in the electric grid over the second time window $TW_2$;
- $\theta$ is a vector of model parameters to be calculated during the training phase of the mathematical model;
- $T_H$ is the time horizon set for calculating the prediction data $D_P$. As an example, $T_H$ may be set as $T_H = 24$ hours;
- $T_P$ is the time granularity set for calculating the prediction data $D_P$. As an example, $T_P$ may be set as $T_P = 15$ minutes.
- The ratio $T_H/T_P$ defines the number of prediction and detection values to be considered for calculating the prediction error. As an example, the ratio takes a value $T_H/T_P = 96$ with a time horizon $T_H$ set at 24 hours and a time granularity $T_P$ set at 15 minutes.

At each training event, a preliminary vector $\theta'$ of model parameters is calculated by solving the unconstrained linear problem:

$$\theta' = argmin_{\theta'} \sum_{i=1}^{T} ||\ A_i - Y_i\ ||^2$$

where:

- $T$ is the number representing the elapsed time (preferably counted in days) up to the training event and during which the first detection data $D_{S1}$ have been collected;
- $A_i$ is a vector of $(T_H/T_P - m)$ detection values included in a time unit $i$ (preferably a day $i$), during which the first detection data $D_{S1}$ have been collected, where $m$ is the set number of regression steps. As an example, the vector $A_i$ has $(96-m)$ values with a time horizon $T_H$ set at 24 hours and a time granularity $T_P$ set at 15 minutes;
- $Y_i$ is a vector of $(T_H/T_P - m)$ prediction values calculated for a time unit $i$ (preferably a day $i$), during which the detection data $D_{S1}$ have been collected. As an example, the vector $Y_i$ has $(96-m)$ values with a time horizon $T_H$ set at 24 hours and a time granularity $T_P$ set at 15 minutes.

The training phase of the mathematical model $M_R$ is terminated if the maximum number of training steps $T_{max}$ is achieved or the calculated error $||\ A_i - Y_i||$ is lower than a predefined threshold.

At the end of the training phase, the last calculated vector $\theta'$ of model parameters becomes the final vector $\theta$ of model parameters of the mathematical model. The mathematical model $M_R$ is thus finally set.

The final vector of model parameters $\theta$ may be expressed as:

$$\theta = [\theta_y,\ \theta_U,\ \theta_{Ul}]$$

where:

- $\theta_y$ is a vector of calculated model parameters linearly combining the endogenous input values input $y(k)$;
- $\theta_U$ is a vector of calculated model parameters linearly combining the first exogenous input values input $U(k)$;
- $\theta_{Ul}$ is a vector of calculated model parameters linearly combining the second exogenous input values input $U_l(k)$.

According to an aspect of the invention, one or more final parameters of the mathematical model $M_R$ are tuned based on previously calculated corresponding parameters of the mathematical model.

In particular, the final model parameters $\theta_{Ul}$ combining the second exogenous input values input $U_l(k)$ may be calculated based on corresponding parameters $\theta'_{Ul}$ calculated during the training phase and previously calculated corresponding parameters $\theta''_{Ul}$ (i.e., corresponding parameters of previously set mathematical models, which were obtained during previous training events). The vector $\theta_{Ul}$ of final model parameters combining the second exogenous input values input $U_l(k)$ may be calculated as:

$$\theta_{Ul} = (1-\alpha)^*\theta'_{Ul} + \alpha * \theta''_{Ul}$$

where:

- $\theta'_{Ul}$ is a vector of corresponding parameters calculated during the latest training event;
- $\theta''_{Ul}$ is a vector of corresponding parameters calculated during a previous training event;
- $\alpha$ is a tunable parameter, with $0 < \alpha <= 1$.

The tunable parameter $\alpha$ allows tuning the speed of adaptation of the input values (second exogenous input values), which are adapted to consider a long-term seasonality of the electric energy consumption, on the acquired detection values indicative of the instantaneous electric energy consumption of the electric grid.

A larger value of $\alpha$ provides a slower adaptation as more weight is given to the contribution of the parameters calculated during preceding training events while a smaller value of $\alpha$ provides a faster adaptation as more weight is given to the contribution of the parameter set during the latest training event.

According to the invention, the prediction method 100 comprises a step 107 of calculating the prediction data $D_P$ based on the mathematical model $M_R$ set at the preceding steps 106.

The prediction data $D_P$ include prediction values related to the electric energy consumption in the electric grid during the third time window $TW_3$.

As shown above, preferably, the prediction data $D_P$ are cyclically calculated at subsequent calculation instants $k$ with a predefined time granularity $T_P$ (e.g, 15 minutes).

Preferably, at each calculation instant $k$, the prediction data $D_P$ are calculated with a predefined time horizon $T_H$ (e.g, 24 hours).

Preferably, the prediction method 100 is cyclically repeated as described above at the end of each third time window $TW_3$.

When third time window $T_{W3}$ expires, a new linear auto-regressive mathematical $M_R$ model is set at a new reference instant $t_R$.

The above-described steps 102-106 of the method 100 are thus repeated with reference to new time windows $TW_1$, $TW_2$ and $TW_3$ calculated based on the new reference instant $t_R$ while the above-mentioned first detection data $D_{S1}$ are continuously acquired (step 101 of the method 100) at each acquisition period.

The newly set mathematical model $M_R$ is then used to calculate prediction values related to the electric energy consumption in the electric grid during a new time window $TW_3$ following the new reference instant $t_R$.

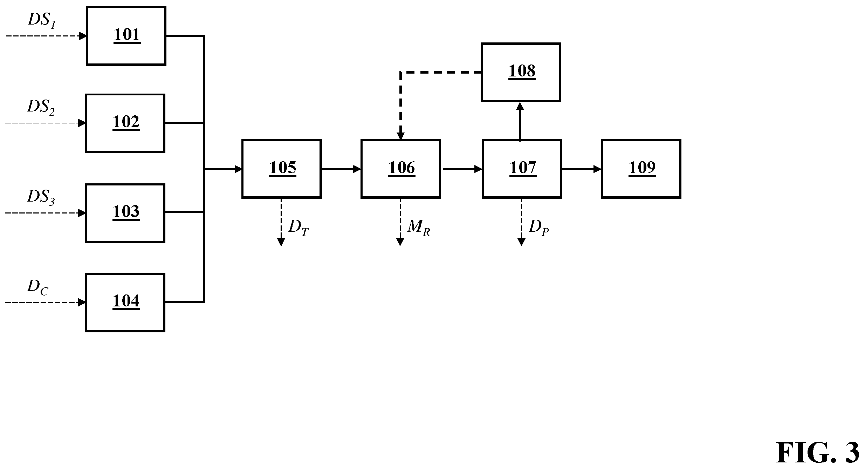

According to an aspect of the invention (figures 3-4), the method 100 comprises a step 108 of carrying out a first check procedure to check the computational performances of the mathematical model $M_R$ established at the reference instant $t_R$.

The first check procedure 108 is aimed at checking whether the prediction data $D_P$ calculated by the mathematical model $M_R$ match with corresponding detection data $D_{S1}$ indicative of the actual electric energy consumption in the electric grid.

Preferably, the first check procedure 108 comprises a step 108a of comparing the first detection data $D_{S1}$ and the prediction data $D_P$, which have respectively been acquired and calculated in a time interval (checking period) between the last execution instant of the first check procedure 108 (or the reference instant $t_R$ if the check procedure is executed for the first time) and the current execution instant of the check procedure.

Preferably, the first check procedure 108 comprises a step 108b of calculating an error function E indicative of differences between the detection values included in the collected first detection data $D_{S1}$ and the prediction values included in the calculated prediction data $D_P$.

The error function E, which may be for example a MAPE error function, provides a measure of prediction accuracy ensured by the mathematical model $M_R$ while calculating the prediction data $D_P$.

The check procedure 108 includes a step 108c of updating the mathematical model $M_R$, if the above-mentioned error function E takes values exceeding a threshold error value $E_{TH}$.

The updating of the mathematical model $M_R$ is carrying out by newly executing the step 106 of the method 100, as described above. In practice, the mathematical model $M_R$ is updated by forcing a new training event to be carried out as described above.

If the above-mentioned error function $E$ takes values, which do not exceed the threshold error value $E_{TH}$, the mathematical model $M_R$ is maintained and the first check procedure 108 is terminated.

Preferably, the first check procedure 108 is carried out cyclically during the third time window $T_{W3}$, for example with a checking period of 24 hours.

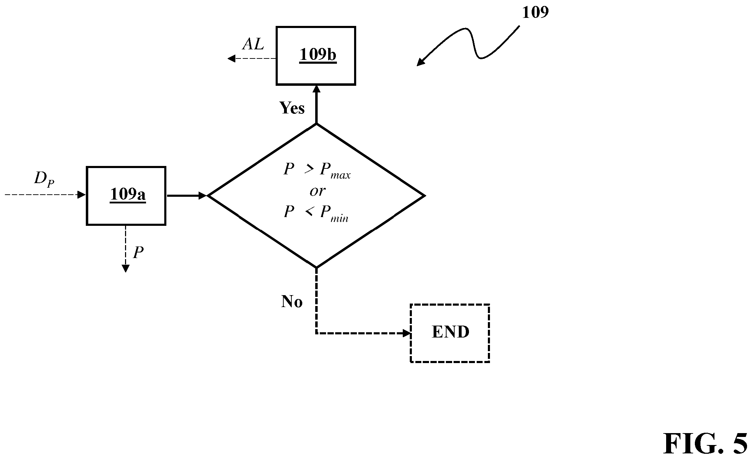

According to another aspect of the invention (figures 3 and 5), the method 100 comprises a step 109 of carrying out a second check procedure to check the predicted electric energy consumption in the electric grid.

The first check procedure 108 is aimed at checking whether the prediction data $D_P$ calculated by the mathematical model $M_R$ falls within a confidence band of prediction.

Preferably, the second check procedure 109 comprises a step 109a of processing the calculated prediction data $D_P$ to calculate a prediction function P indicative of a predicted trend of the electric energy consumption in the electric grid.

In order to calculate the prediction function P, the calculated prediction data $D_P$ may be processed by means of suitable statistical techniques of known type.

Preferably, the second check procedure 109 comprises a step 109b of generating an alert signal $AL$, if the prediction function P takes values higher than a predefined maximum confidence value $P_{Max}$ or lower than a predefined minimum confidence value $P_{Min}$.

The confidence values $P_{max}$, $P_{min}$ may be conveniently calculated by calculating an error function indicative of differences between the detection values included in the collected first detection data $D_{S1}$ and the prediction values included in the calculated prediction data $D_P$ and processing said error function by means of suitable statistical techniques of known type.

If the above-mentioned prediction function P takes values within the confidence band defined by the confidence values $P_{max}$, $P_{min}$, the second check procedure 109 is terminated.

Preferably, the second check procedure 109 is carried out cyclically during the third time window $T_{W3}$, for example with a repetition period of 24 hours.

The prediction method 100, according to the present invention, provides relevant advantages. The prediction method 100 ensure high level performances in terms of prediction accuracy.

The circumstance that the linear auto-regressive model $M_R$ is configured to process both first and second exogenous input values $U(k)$, $U_l(k)$ is particularly relevant from this point of view. This solution, in fact, allows remarkably improving the prediction accuracy as short-term and long-term factors, which may influence the trend of the electric energy consumption, are duly considered while calculating the prediction data $D_P$.

The fine tuning of the model parameters $\theta$ carried out after the completion of the training phase, particularly of the parameters $\theta_{Ul}$ intended to model the long-term seasonality of the electric energy consumption, further improves the performances provided by the prediction method 100.

The iterative checking of the accuracy of the calculated prediction data further improves the reliability of the prediction method.

In confirmation of the above, experimental tests have shown that the prediction method 100 ensures accuracy performances fully comparable with the accuracy performances provided by the known methods of the state of the art based on ML algorithms.

The prediction method 100 is configured to process relatively small sets of data. Therefore, it is particularly adapted for being implemented in computing systems having limited computational and data storage resources, for example in Edge computing systems commonly-used for managing the operation of electric grids.

The prediction method 100 is thus particularly adapted to be implemented using the hardware and software resources already installed on the field to manage the operation of an electric grid. The prediction method 100 is thus adapted for being implemented in digitally enabled power distribution networks (smart grids, micro-grids and the like).

**Claims**

1. Method (100) for predicting electric energy consumption in an electric grid (1), said method being **characterised by** the following steps:

   - acquiring (101) first detection data ($D_{S1}$) including detection values related to an actual electric energy consumption in said electric grid;
   - acquiring (102, 103) additional detection data ($D_{S2}$, $D_{S3}$) including detection values related to the energy consumption in said electric grid during at least a time window ($TW_1$, $TW_2$) preceding a reference instant ($t_R$);
   - acquiring (104) calendar data ($D_C$) including chronological information associated to the operation of said electric grid;
   - calculating (105) training data ($D_T$) based on the acquired detection data and calendar data;
   - based on said training data ($D_T$), setting (106) a linear auto-regressive mathematical model ($M_R$) describing the trend of the electric energy consumption in said electric grid, said linear auto-regressive mathematical model ($M_R$) being configured to process at least a set of exogenous input values ($U(k)$, $U_I(k)$) indicative of at least a periodic function ($U(t)$, $U_I(t)$) approximating the profile of the electric energy consumption in said electric grid over said at least a time window ($TW_1$, $TW_2$) preceding said reference instant ($t_R$);
   - based on said linear auto-regressive model ($M_R$), calculating (107) prediction data ($D_P$) including prediction values related to the electric energy consumption in said electric grid during a time window ($TW_3$) following said reference instant ($t_R$).

2. Method, according to claim 1, **characterised in that** it comprises the step of acquiring (102) second detection data ($D_{S2}$) including detection values related to the energy consumption in said electric grid during a first time window ($TW_1$) preceding said reference instant ($t_R$), wherein said linear auto-regressive mathematical model ($M_R$) is configured to process first exogenous input values ($U(k)$) indicative of a first periodic function ($U(t)$) approximating the profile of the electric energy consumption in said electric grid over said first time window ($TW_1$).

3. Method, according to one of the previous claims, **characterised in that** it comprises the step of acquiring (103) third detection data ($D_{S3}$) including detection values related to the energy consumption in said electric grid during a second time window ($TW_2$) preceding said reference instant ($t_R$), wherein said linear auto-regressive mathematical model ($M_R$) is configured to process second exogenous input values ($U_I(k)$) indicative of a second periodic function ($U_I(t)$) approximating the profile of the electric energy consumption in said electric grid over said second time window ($TW_2$).

4. Method, according to one of the previous claims, **characterised in that** the step (105) of calculating said training data ($D_T$) includes processing the acquired first detection data ($D_{S1}$) to check the correctness of said data.

5. Method, according to claim 2, **characterised in that** the step (105) of calculating said training data ($D_T$) includes processing the acquired second detection data ($D_{S2}$) to identify the trend of the electric energy consumption in the electric grid during the first time window ($TW_1$).

6. Method, according to claim 3, **characterised in that** the step (105) of calculating said training data ($D_T$) includes processing the acquired third detection data ($D_{S3}$) to identify the trend of the electric energy consumption in the electric grid during the second time window ($TW_2$).

7. Method, according to one of the previous claims, **characterised in that** said prediction data ($D_P$) are cyclically calculated with a predefined time granularity ($T_P$) and with a predefined time horizon ($T_H$).

8. Method, according to one of the previous claims, **characterised in that** said linear auto-regressive mathematical model ($M_R$) is a linear ARX mathematical model with one or more exogeneous inputs.

9. Method, according to one of the previous claims, **characterised in that** setting said linear auto-regressive mathematical model ($M_R$) includes:

   - setting a regression order ($m$) and a maximum number ($T_{max}$) of training steps for said linear auto-regressive mathematical model ($M_R$);
   - iteratively calculating one or more parameters ($\theta$) of said linear auto-regressive mathematical model ($M_R$) based on said training data ($D_T$) during said training steps by solving an unconstrained linear problem established basing on the set regression order ($m$) and maximum number ($T_{max}$) of training steps.

10. Method, according to one of the previous claims, **characterised in that** setting said linear auto-regressive mathematical model ($M_R$) includes tuning one or more parameters ($\theta_{UI}$) of said linear auto-regressive model ($M_R$) based on corresponding parameters ($\theta_{UI}$) calculated during said training steps and one or more parameters ($\theta''_{UI}$) calculated for previously set linear auto-regressive mathematical models ($M_R$).

11. Method, according to one of the previous claims, **characterised in that** it comprises the step (108) of carrying out a first check procedure to check the computational performances of said mathematical model.

12. Method, according to claim 11, **characterised in that** said first check procedure (108) comprises:

- comparing (108a) the first detection data ($D_{S1}$) acquired during a predefined checking period and the prediction data ($D_P$) calculated during said checking interval;
- calculating (108b) an error function (E) indicative of differences between the detection values included in said first detection data ($D_{S1}$) and the prediction values included in said prediction data ($D_P$);
- updating (108c) said auto-regressive mathematical model ($M_R$), if said error function (E) takes values exceeding a threshold error value ($E_{TH}$).

13. Method, according to one of the previous claims, **characterised in that** it comprises the step (109) of carrying out a second check procedure to check the electric energy consumption predicted by said mathematical model.

14. Method, according to claim 13, **characterised in that** said second check procedure (109) comprises:

- processing (109a) the calculated prediction data ($D_P$) to calculate a prediction function (P) indicative of a predicted trend of the electric energy consumption in said electric grid;
- generating (109b) an alert signal, if said prediction function (P) takes values higher a maximum confidence value ($P_{max}$) or lower than a minimum confidence value ($P_{min}$).

15. A computer program, which is stored or storable in a storage medium, **characterised in that** it comprises software instructions to implement a method (100), according to one or more of the previous claims.

16. A computerized device **characterised in that** it comprises data processing resources configured to execute software instructions to implement a method (100), according to one or more of the claims from 1 to 14.

17. A computerised device, according to claim 16, **characterised in that** it is an intelligent electronic device (5) for an electric power distribution grid (1).


**Patentansprüche**

1. Verfahren (100) zur Vorhersage des elektrischen Energieverbrauchs in einem Stromnetz (1), wobei das Verfahren durch die folgenden Schritte gekennzeichnet ist:

- Erfassen (101) erster Detektionsdaten ($D_{S1}$), die Detektionswerte in Bezug auf einen tatsächlichen elektrischen Energieverbrauch in dem Stromnetz umfassen;
- Erfassen (102, 103) zusätzlicher Detektionsdaten ($D_{S2}$, $D_{S3}$), die Detektionswerte bezüglich des Energieverbrauchs in dem Stromnetz während mindestens eines Zeitfensters ($TW_1$, $TW_2$) vor einem Referenzzeitpunkt ($t_R$) umfassen;
- Erfassen (104) von Kalenderdaten ($D_C$), die chronologische Informationen umfassen, die mit dem Betrieb des Stromnetzes assoziiert sind;
- Berechnen (105) von Trainingsdaten ($D_T$) basierend auf den erfassten Detektionsdaten und Kalenderdaten;
- basierend auf den Trainingsdaten ($D_T$) Festlegen (106) eines linearen autoregressiven mathematischen Modells ($M_R$), das die Tendenz des elektrischen Energieverbrauchs in dem Stromnetz beschreibt, wobei das lineare autoregressive mathematische Modell ($M_R$) dazu ausgelegt ist, mindestens einen Satz von exogenen Eingabewerten ($U(k)$, $U_I(k)$) zu verarbeiten, die mindestens eine periodische Funktion ($U(t)$ $U_I(t)$)) anzeigen, die sich dem Profil des elektrischen Energieverbrauchs in dem Stromnetz über das mindestens eine Zeitfenster ($TW_1$, $TW_2$) vor dem Referenzzeitpunkt ($t_R$) annähert;
- basierend auf dem linearen autoregressiven Modell ($M_R$) Berechnen (107) von Vorhersagedaten ($D_P$), die Vorhersagewerte in Bezug auf den elektrischen Energieverbrauch in dem Stromnetz während eines Zeitfensters

(TW$_3$) nach dem Referenzzeitpunkt (t$_R$) umfassen.

2. Verfahren nach Anspruch 1, **dadurch gekennzeichnet, dass** es den Schritt des Erfassens (102) zweiter Detektionsdaten (D$_{S2}$) umfasst, die Detektionswerte in Bezug auf den Energieverbrauch in dem Stromnetz während eines ersten Zeitfensters (TW$_1$) vor dem Referenzzeitpunkt (t$_R$) umfassen, wobei das lineare autoregressive mathematische Modell (M$_R$) dazu ausgelegt ist, erste exogene Eingabewerte (U(k)) zu verarbeiten, die eine erste periodische Funktion (U(t)) anzeigen, die sich dem Profil des elektrischen Energieverbrauchs in dem Stromnetz über das erste Zeitfenster (TW$_1$) annähert.

3. Verfahren nach einem der vorhergehenden Ansprüche, **dadurch gekennzeichnet, dass** es den Schritt des Erfassens (103) dritter Detektionsdaten (D$_{S3}$) umfasst, die Detektionswerte in Bezug auf den Energieverbrauch in dem Stromnetz während eines zweiten Zeitfensters (TW$_2$) vor dem Referenzzeitpunkt (t$_R$) umfassen, wobei das lineare autoregressive mathematische Modell (M$_R$) dazu ausgelegt ist, zweite exogene Eingabewerte (U$_I$(k)) zu verarbeiten, die eine zweite periodische Funktion (U$_I$(t)) anzeigen, die sich dem Profil des elektrischen Energieverbrauchs in dem Stromnetz über das zweite Zeitfenster (TW$_2$) annähert.

4. Verfahren nach einem der vorhergehenden Ansprüche, **dadurch gekennzeichnet, dass** der Schritt (105) des Berechnens der Trainingsdaten (D$_T$) Verarbeiten der erfassten ersten Detektionsdaten (D$_{S1}$) umfasst, um die Richtigkeit der Daten zu überprüfen.

5. Verfahren nach Anspruch 2, **dadurch gekennzeichnet, dass** der Schritt (105) des Berechnens der Trainingsdaten (D$_T$) Verarbeiten der erfassten zweiten Detektionsdaten (D$_{S2}$) umfasst, um die Tendenz des elektrischen Energieverbrauchs in dem Stromnetz während des ersten Zeitfensters (TW$_1$) zu identifizieren.

6. Verfahren nach Anspruch 3, **dadurch gekennzeichnet, dass** der Schritt (105) des Berechnens der Trainingsdaten (D$_T$) Verarbeiten der erfassten dritten Detektionsdaten (D$_{S3}$) umfasst, um die Tendenz des elektrischen Energieverbrauchs im Stromnetz während des zweiten Zeitfensters (TW$_2$) zu identifizieren.

7. Verfahren nach einem der vorhergehenden Ansprüche, **dadurch gekennzeichnet, dass** die Vorhersagedaten (D$_P$) zyklisch mit einer vordefinierten Zeitgranularität (T$_P$) und mit einem vordefinierten Zeithorizont (T$_H$) berechnet werden.

8. Verfahren nach einem der vorhergehenden Ansprüche, **dadurch gekennzeichnet, dass** das lineare autoregressive mathematische Modell (M$_R$) ein lineares mathematisches ARX-Modell mit einer oder mehreren exogenen Eingaben ist.

9. Verfahren nach einem der vorhergehenden Ansprüche, **dadurch gekennzeichnet, dass** das Festlegen des linearen autoregressiven mathematischen Modells (M$_R$) Folgendes umfasst:

- Festlegen einer Regressionsreihenfolge (m) und einer maximalen Anzahl (T$_{max}$) von Trainingsschritten für das lineare autoregressive mathematische Modell (M$_R$);
- iteratives Berechnen eines oder mehrerer Parameter (θ) des linearen autoregressiven mathematischen Modells (M$_R$) basierend auf den Trainingsdaten (D$_T$) während der Trainingsschritte durch Lösen eines unbeschränkten linearen Problems, das basierend auf der festgelegten Regressionsreihenfolge (m) und maximalen Anzahl (T$_{max}$) von Trainingsschritten aufgestellt wird.

10. Verfahren nach einem der vorhergehenden Ansprüche, **dadurch gekennzeichnet, dass** das Festlegen des linearen autoregressiven mathematischen Modells (M$_R$) Abstimmen eines oder mehrerer Parameter (θ$_{UI}$) des linearen autoregressiven Modells (M$_R$) basierend auf entsprechenden Parametern (θ'$_{UI}$), die während der Trainingsschritte berechnet wurden, und einem oder mehreren Parametern (θ"$_{UI}$) umfasst, die für zuvor festgelegte lineare autoregressive mathematische Modelle (M$_R$) berechnet wurden.

11. Verfahren nach einem der vorhergehenden Ansprüche, **dadurch gekennzeichnet, dass** es den Schritt (108) des Durchführens eines ersten Prüfvorgangs zum Überprüfen der Rechenleistungen des mathematischen Modells umfasst.

12. Verfahren nach Anspruch 11, **dadurch gekennzeichnet, dass** der erste Prüfvorgang (108) Folgendes umfasst:

- Vergleichen (108a) der während einer vordefinierten Prüfperiode erfassten ersten Detektionsdaten ($D_{S1}$) und der während des Prüfintervalls berechneten Vorhersagedaten ($D_P$);
- Berechnen (108b) einer Fehlerfunktion (E), die Unterschiede zwischen den Detektionswerten, die in den ersten Detektionsdaten ($D_{S1}$) enthalten sind, und den Vorhersagewerten anzeigt, die in den Vorhersagedaten ($D_P$) enthalten sind;
- Aktualisieren (108c) des autoregressiven mathematischen Modells ($M_R$), falls die Fehlerfunktion (E) Werte annimmt, die einen Schwellenfehlerwert ($E_{TH}$) überschreiten.

13. Verfahren nach einem der vorhergehenden Ansprüche, **dadurch gekennzeichnet, dass** es den Schritt (109) des Durchführens eines zweiten Prüfvorgangs zum Überprüfen des von dem mathematischen Modell vorhergesagten elektrischen Energieverbrauchs umfasst.

14. Verfahren nach Anspruch 13, **dadurch gekennzeichnet, dass** der zweite Prüfvorgang (109) Folgendes umfasst:

- Verarbeiten (109a) der berechneten Vorhersagedaten ($D_P$), um eine Vorhersagefunktion (P) zu berechnen, die eine vorhergesagte Tendenz des elektrischen Energieverbrauchs in dem Stromnetz anzeigt;
- Erzeugen (109b) eines Warnsignals, falls die Vorhersagefunktion (P) Werte annimmt, die höher als ein maximaler Konfidenzwert ($P_{max}$) oder niedriger als ein minimaler Konfidenzwert ($P_{min}$) sind.

15. Computerprogramm, das in einem Speichermedium gespeichert ist oder gespeichert werden kann, **dadurch gekennzeichnet, dass** es Softwareanweisungen umfasst, um ein Verfahren (100) nach einem oder mehreren der vorhergehenden Ansprüche zu implementieren.

16. Computergestützte Vorrichtung, **dadurch gekennzeichnet, dass** sie Datenverarbeitungsressourcen umfasst, die dazu ausgelegt sind, Softwareanweisungen auszuführen, um ein Verfahren (100) nach einem oder mehreren der Ansprüche 1 bis 14 zu implementieren.

17. Computergestützte Vorrichtung nach Anspruch 16, **dadurch gekennzeichnet, dass** es sich dabei um eine intelligente elektronische Vorrichtung (5) für ein elektrisches Stromverteilungsnetz (1) handelt.

## Revendications

1. Procédé (100) de prédiction de consommation d'énergie électrique dans un réseau électrique (1), ledit procédé étant **caractérisé par** les étapes suivantes :

- l'acquisition (101) de premières données de détection ($D_{S1}$) comprenant des valeurs de détection liées à une consommation réelle d'énergie électrique dans ledit réseau électrique ;
- l'acquisition (102, 103) de données de détection supplémentaires ($D_{S2}$, $D_{S3}$) comprenant des valeurs de détection liées à la consommation d'énergie dans ledit réseau électrique pendant au moins une fenêtre temporelle ($TW_1$, $TW_2$) précédant un instant de référence ($t_R$) ;
- l'acquisition (104) de données de calendrier ($D_C$) comprenant des informations chronologiques associées au fonctionnement dudit réseau électrique ;
- le calcul (105) de données d'apprentissage ($D_T$) sur la base des données de détection et des données de calendrier acquises ;
- sur la base desdites données d'apprentissage ($D_T$), le réglage (106) d'un modèle mathématique auto-régressif linéaire ($M_R$) décrivant la tendance de la consommation d'énergie électrique dans ledit réseau électrique, ledit modèle mathématique auto-régressif linéaire ($M_R$) étant configuré pour traiter au moins un ensemble de valeurs d'entrée exogènes ($U(k)$, $U_l(k)$) indicatives d'au moins une fonction périodique ($U(t)$, $U_l(t)$) approximant le profil de la consommation d'énergie électrique dans ledit réseau électrique sur ladite au moins une fenêtre temporelle ($TW_1$, $TW_2$) précédant ledit instant de référence ($t_R$);
- sur la base dudit modèle auto-régressif linéaire ($M_R$), le calcul (107) de données de prédiction ($D_P$) comprenant des valeurs de prédiction liées à la consommation d'énergie électrique dans ledit réseau électrique pendant une fenêtre temporelle ($TW_3$) suivant ledit instant de référence ($t_R$).

2. Procédé selon la revendication 1, **caractérisé en ce qu'**il comprend l'étape d'acquisition (102) de deuxièmes données de détection ($D_{S2}$) comprenant des valeurs de détection liées à la consommation d'énergie dans ledit réseau électrique pendant une première fenêtre temporelle ($TW_1$) précédant ledit instant de référence ($t_R$), dans lequel ledit modèle mathématique auto-régressif linéaire ($M_R$) est configuré pour traiter des premières valeurs d'entrée exogènes ($U(k)$) indicatives d'une première fonction périodique ($U(t)$) approximant le profil de la consommation d'énergie électrique dans ledit réseau électrique sur ladite première fenêtre temporelle ($TW_1$).

3. Procédé selon l'une des revendications précédentes, **caractérisé en ce qu'**il comprend l'étape d'acquisition (103) de troisièmes données de détection ($D_{S3}$) comprenant des valeurs de détection liées à la consommation d'énergie dans ledit réseau électrique pendant une seconde fenêtre temporelle ($TW_2$) précédant ledit instant de référence ($t_R$), dans lequel ledit modèle mathématique auto-régressif linéaire ($M_R$) est configuré pour traiter des secondes valeurs d'entrée exogènes ($U_I(k)$) indicatives d'une seconde fonction périodique ($U_I(t)$) approximant le profil de la consommation d'énergie électrique dans ledit réseau électrique sur ladite seconde fenêtre temporelle ($TW_2$).

4. Procédé selon l'une des revendications précédentes, **caractérisé en ce que** l'étape (105) de calcul desdites données d'apprentissage ($D_T$) comprend le traitement des premières données de détection acquises ($D_{S1}$) pour vérifier l'exactitude desdites données.

5. Procédé selon la revendication 2, **caractérisé en ce que** l'étape (105) de calcul desdites données d'apprentissage ($D_T$) comprend le traitement des deuxièmes données de détection acquises ($D_{S2}$) pour identifier la tendance de la consommation d'énergie électrique dans le réseau électrique pendant la première fenêtre temporelle ($TW_1$).

6. Procédé selon la revendication 3, **caractérisé en ce que** l'étape (105) de calcul desdites données d'apprentissage ($D_T$) comprend le traitement des troisièmes données de détection acquises ($D_{S3}$) pour identifier la tendance de la consommation d'énergie électrique dans le réseau électrique pendant la seconde fenêtre temporelle ($TW_2$).

7. Procédé selon l'une des revendications précédentes, **caractérisé en ce que** lesdites données de prédiction ($D_P$) sont calculées cycliquement avec une granularité temporelle prédéfinie ($T_P$) et avec un horizon temporel prédéfini ($T_H$).

8. Procédé selon l'une des revendications précédentes, **caractérisé en ce que** ledit modèle mathématique auto-régressif linéaire ($M_R$) est un modèle mathématique ARX linéaire avec une ou plusieurs entrées exogènes.

9. Procédé selon l'une des revendications précédentes, **caractérisé en ce que** le réglage dudit modèle mathématique auto-régressif linéaire ($M_R$) comprend :

   - le réglage d'un ordre de régression ($m$) et d'un nombre maximal ($T_{max}$) d'étapes d'apprentissage dudit modèle mathématique auto-régressif linéaire ($M_R$) ;
   - le calcul itératif d'un ou plusieurs paramètres ($\theta$) dudit modèle mathématique auto-régressif linéaire ($M_R$) sur la base desdites données d'apprentissage ($D_T$) lors desdites étapes d'apprentissage en résolvant un problème linéaire non contraint établi en se basant sur l'ordre de régression ($m$) et le nombre maximal ($T_{max}$) réglés d'étapes d'apprentissage.

10. Procédé selon l'une des revendications précédentes, **caractérisé en ce que** le réglage dudit modèle mathématique auto-régressif linéaire ($M_R$) comprend le réglage d'un ou plusieurs paramètres ($\theta_{UI}$) dudit modèle auto-régressif linéaire ($M_R$) sur la base de paramètres correspondants ($\theta'_{UI}$) calculés pendant lesdites étapes d'apprentissage et d'un ou plusieurs paramètres ($\theta'_{UI}$) calculés pour des modèles mathématiques auto-régressifs linéaires précédemment réglés ($M_R$).

11. Procédé selon l'une des revendications précédentes, **caractérisé en ce qu'**il comprend l'étape (108) consistant à exécuter une première procédure de vérification pour vérifier les performances de calcul dudit modèle mathématique.

12. Procédé selon la revendication 11, **caractérisé en ce que** ladite première procédure de contrôle (108) comprend :

   - la comparaison (108a) des premières données de détection ($D_{S1}$) acquises pendant une période de vérification prédéfinie et des données de prédiction ($D_P$) calculées pendant ledit intervalle de vérification ;
   - le calcul (108b) d'une fonction d'erreur ($E$) indicative de différences entre les valeurs de détection comprises dans lesdites premières données de détection ($D_{S1}$) et les valeurs de prédiction comprises dans lesdites données de prédiction ($D_P$) ;
   - la mise à jour (108c) dudit modèle mathématique auto-régressif ($M_R$), si ladite fonction d'erreur ($E$) prend des valeurs dépassant une valeur d'erreur de seuil ($E_{TH}$).

**13.** Procédé selon l'une des revendications précédentes, **caractérisé en ce qu'** il comprend l'étape (109) consistant à exécuter une seconde procédure de vérification pour vérifier la consommation d'énergie électrique prédite par ledit modèle mathématique.

**14.** Procédé selon la revendication 13, **caractérisé en ce que** ladite seconde procédure de vérification (109) comprend :

- le traitement (109a) des données de prédiction calculées ($D_P$) pour calculer une fonction de prédiction (P) indicative d'une tendance prédite de la consommation d'énergie électrique dans ledit réseau électrique ;
- la génération (109b) d'un signal d'alerte, si ladite fonction de prédiction (P) prend des valeurs supérieures à une valeur de confiance maximale ($P_{max}$) ou inférieures à une valeur de confiance minimale ($P_{min}$).

**15.** Programme d'ordinateur, qui est stocké ou stockable sur un support de stockage, **caractérisé en ce qu'**il comprend des instructions logicielles pour mettre en œuvre un procédé (100) selon l'une ou plusieurs des revendications précédentes.

**16.** Dispositif informatisé **caractérisé en ce qu'**il comprend des ressources de traitement de données configurées pour exécuter des instructions logicielles pour mettre en œuvre un procédé (100) selon l'une ou plusieurs des revendications de 1 à 14.

**17.** Dispositif informatisé selon la revendication 16, **caractérisé en ce qu'**il s'agit d'un dispositif électronique intelligent (5) pour un réseau de distribution d'énergie électrique (1).

**FIG. 1**

$TW_2$

$TW_1$

$k$ $k+1$

$t_R$ $T_P$ $T_H$

$TW_3$

t

**FIG. 2**

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10515308 B2